# EUROPÄISCHE PATENTSCHRIFT

(11) **EP 1 015 291 B1**
(45) Veröffentlichungstag und Bekanntmachung des Hinweises auf die Patenterteilung: **14.05.2003**
(21) Anmeldenummer: 99947226.9
(22) Anmeldetag: 20.07.1999
(51) Int. Cl.: B62D 1/00

(54) **SICHERHEITSLENKSÄULE**
SAFETY STEERING COLUMN
COLONNE DE DIRECTION DE SECURITE

(30) Priorität: 24.07.1998 DE 19833421
(43) Veröffentlichungstag der Anmeldung: 05.07.2000
(73) Patentinhaber: NACAM Deutschland GmbH, 49448 Lemförde (DE)
(72) Erfinder: MICHALSKI, Herniu, D-28816 Brinkum (DE); GRAMS, Kay-Uwe, D-49692 Cappeln (DE); VORTMEYER, Jens, D-32361 Preussisch-Oldendorf (DE); SCHÄFER, Burghard, D-27777 Ganderkesee (DE)
(86) Internationale Anmeldenummer: DE9902209
(87) Internationale Veröffentlichungsnummer: WO00006439

(56) Entgegenhaltungen:
- EP-A- 0 856 452
- US-A- 3 916 720

## Beschreibung

Die Erfindung betrifft eine Sicherheitslenksäule für Kraftfahrzeuge mit einem Lenksäulengehäuse, einem sich in den Fahrgastraum erstreckenden Mantelrohr und einer darin drehbar gelagerten Lenkwelle zur Aufnahme eines Lenkrades, die im Fall eines Frontalunfalls verkürzbar ist.

Derartige energieabsorbierende Sicherheitslenksäulen kommen zur Anwendung, um den Aufprall eines Fahrers bei einem Frontalcrash/Offsetcrash zusätzlich zur Abstützung durch einen Airbag abzudämpfen. Es sind Sicherheitssysteme bekannt, bei denen vorgeformte Wellrohre in der Lenksäule während des Crashvorganges ziehharmonikaartig verformt werden und somit die Bewegungsenergie absorbieren.

Bei der Abstützung des Fahrers werden dabei sowohl axiale als auch radiale Kräfte in die Lenksäule eingeleitet. Nachteilig an den bekannten Wellrohren ist, daß diese sehr biegeweich sind und dementsprechend eine geringe Querstabilität aufweisen. Dadurch treten unerwünschte Schwingungen auf Bei einer Verformung können nicht vorbestimmbare Deformationen entstehen, die sich nachteilig auf die Sicherheit eines Fahrzeugführers auswirken.

In der DE-OS 20 44 905 ist eine stoßabsorbierende Lenksäule für Motorfahrzeuge offenbart, die ein Lenksäulengehäuse, ein sich in den Fahrgastraum erstreckendes Mantelrohr, eine in dem Mantelrohr drehbar gelagerte und im Fall eines Unfalles verkürzbare Lenkwelle zur Aufnahme eines Lenkrades sowie ein koaxial zu dem Ende des Mantelrohres benachbart angeordnetes, konusartiges Bauteil aufweist, dessen kleinster Außendurchmesser kleiner oder gleich dem Innendurchmesser des Mantelrohres ist und das mit seinem kleinsten Außendurchmesser dem Mantelrohr der Lenksäule zugewandt ist. Das Mantelrohr wird im Crashfall unter Energieaufzehrung aufgeweitet. Nachteilig ist dabei jedoch, daß eine Rißbildung im Mantelrohr unkontrollierbar erfolgt, sodaß möglicherweise eine erhebliche zusätzliche Verletzungsgefahr für die Fahrzeuginsassen dadurch entsteht, daß scharfkantige Mantelrohrteile in den Fahrgastinnenraum eintreten können.

Aus der DE 42 06 781 A1 ist darüber hinaus ein nach dem Stülpprinzip arbeitendes Deformationselement mit einem rohrartigen Deformationsglied aus einem plastisch verformbaren Material und zumindest einem einem Endbereich des Deformationsglieds gegenüberstehenden Anschlag bekannt, der ein Stülpprofil zum fortlaufenden Rückstülpen des Deformationsglieds trägt. Das den Anschlag tragende Bauteil wird dabei durch eine Zugkraft in das Deformationsglied eingezogen, sodaß sich dieses verformt Bei einer derartigen Ausführung eines Deformationselementes besteht ebenfalls die Gefahr, unkontrolliert auftretender Rißbildungen im Verformungsbereich, sodaß bei der Verwendung des in der DE 42 06 781 A1 beschriebenen Deformationselementes für eine Lenksäule eines Kraftfahzeuges gefährlich scharfkantige Teile in den Fahrgastinnenraum eintreten können.

Eine gattungsgemäße Sicherheitslenksäule für Kraftfahrzeugen ist aus US-3 916 720-A auch bekannt.

Der Erfindung liegt das technische Problem zugrunde, eine energieabsorbierende Sicherheitslenksäule zur Verfügung zu stellen, bei der eine uneingeschränkte Quersteifigkeit des Mantelrohres auch im Crashfall erhalten bleibt und dabei verhindert wird, daß scharfkantige Blechteile über die Kontur der Lenkradnabe in den Fahrgastraum hervortreten.

Dieses technischen Problems wird in Verbindung mit den Oberbegriffsmerkmalen erfindungsgemäß durch die im kennzeichnenden Teil des Patentanspruchs 1 angegebene technische Lehre gelöst.

Dabei sind in das sich in den Fahrgastraum erstreckende Ende des Mantelrohres Materialschwächungen eingebracht, die über den Umfang des Mantelrohres verteilt sind. Benachbart dem Ende des Mantelrohres ist ein konusartiges Bauteil koaxial angeordnet, dessen kleinster Außendurchmesser dem des Innendurchmessers des Endes des Mantelrohres entspricht, wobei dieser kleinste Außendurchmesser dem Ende des Mantelrohres zugewandt ist.

Von besonderem Vorteil bei dieser erfinderischen Sicherheitslenksäule ist, daß eine sehr hohe Quersteifigkeit des Rohres erzielt, beziehungsweise aufrechterhalten werden kann. Die während des Crashs auftretenden elastischen Biegekräfte können sich bei dieser Konstruktion nicht auf die Lenksäule auswirken, da eine Verkürzung der Sicherheitslenksäule dazu führt, daß das konusartige Bauteil in das Mantelrohr eindringt. Das Mantelrohrende reißt dabei in mehrere streifenförmige axiale Abschnitte auf. Diese axialen Abschnitte verformen sich während des Aufreißens plastisch. Durch die auftretenden Reibungs- und Verformungskräfte wird die Aufprallenergie absorbiert. Nach einem Aufprall wird eine axiale Bewegung des Lenkrades in einer zur Fahrtrichtung entgegengesetzten Richtung durch die zwischen Mantelrohr und konusartigem Bauteil vorhandene Reibung wirksam verhindert.

Durch diese erfindungsgemäße Weiterentwicklung wird eine einfachere Herstellbarkeit der Sicherheitslenksäule erreicht, wodurch sich die Herstellungskosten erheblich reduzieren. Das Mantelrohr kann als einstückiges Bauteil gefertigt werden, wobei die Materialschwächungen bereits bei der Herstellung einformbar sind. Das zusätzliche Kerben des Endbereiches des Mantelrohres kann demnach entfallen.

Eine Sicherheitslenksäule für Kraftfahrzeuge mit den zuvor beschriebenen technischen Merkmalen, wurde dahingehend weiterentwickelt, daß die Materialschwächungen sich über die gesamte Mantelrohrlänge erstrecken und beispielsweise in das Mantelrohr eingeformte Nuten sein.

Nach einer weiteren Ausgestaltung der Erfindung können diese Nuten im Querschnitt gesehen eine Keilform, eine Schwalbenschwanzform, eine Kreisform oder eine U-Form aufweisen. Selbstverständlich liegen auch andere Querschnittsgeometrien innerhalb des Erfindungsgedankens.

Bei einer besonders vorteilhaften Ausführungsform der Erfindung sind die Materialschwächungen als in den Randbereich des Mantelrohres eingebrachte Einkerbungen ausgeführt. Diese Einkerbungen können in regelmäßigen oder unregelmäßigen Abständen über den Umfang des Endes des Mantelrohres verteilt sein. Über eine Variation der Wanddicke des Mantelrohres und der Anzahl und Anordnung der Einkerbungen läßt sich das Verhalten der Sicherheitslenksäule in einem weiten Bereich an die zu erwartenden Beanspruchungen anpassen.

Gemäß einer bevorzugten Ausführungsform der Erfindung erweitert sich die Oberfläche des konusartigen Bauteils entlang einer konkav verlaufenden Konturlinie von einem kleinen Außendurchmesser mit koaxialer Oberfläche bis zu einem großen Außendurchmesser mit einer sich radial erstreckenden Oberfläche. Bei einem Frontalunfall und einem Zusammenschieben der Sicherheitslenksäule entstehen an den Einkerbungen axiale Risse, wobei sich die entstehenden streifenförmigen Segmente des Mantelrohres auftulpen beziehungsweise sich lockenförmig ineinander drehen.

Von besonderem Vorteil ist eine Ausführungsform der Erfindung, bei der das konusartige Bauteil auch als Lagersitz für die Lagerung der Lenkwelle ausgebildet ist. Bei einer solchen Version ist das konusartige Bauteil kraftschlüssig und/oder formschlüssig mit dem Ende des Mantelrohres verbunden.

Bei einer anderen zu bevorzugenden Ausführungsform kann das konusartige Bauteil als Außenschale der Lagerung der Lenksäule ausgeführt sein. Dies führt zu einer wesentlichen Verringerung der Anzahl der benötigen Bauteile.

Bei einer weiteren Ausführungsform des Gegenstandes der Erfindung ist das konusartige Bauteil als rückseitiges Bauteil des Lenkrades ausgeführt, so daß es im Normalbetrieb des Kraftfahrzeuges gegenüber dem Mantelrohr verdrehbar ist und nur im Falle eines Frontalzusammenstoßes mit dem Mantelrohr in Kontakt tritt.

Darüber hinaus ist es möglich, die Materialschwächungen am Außenumfang oder am Innenumfang des Mantelrohres einzubringen.

Nachfolgend ist ein Ausführungsbeispiel der Erfindung anhand von Zeichnungen näher beschrieben. Es zeigen:
Figur 1 eine Teilansicht der Sicherheitslenksäule,
Figur 2 eine Schnittdarstellung der Figur 1 und
Figur 3 eine Schnittdarstellung der Sicherheitslenksäule nach einem Frontalunfall,
Figur 4 einen teilweisen Ausschnitt eines Mantelrohres einer erfindungsgemäßen Sicherheitslenksäule.

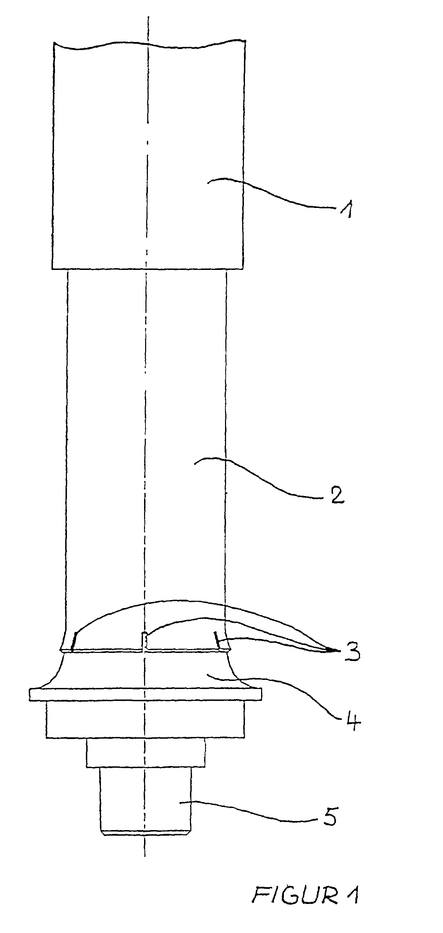

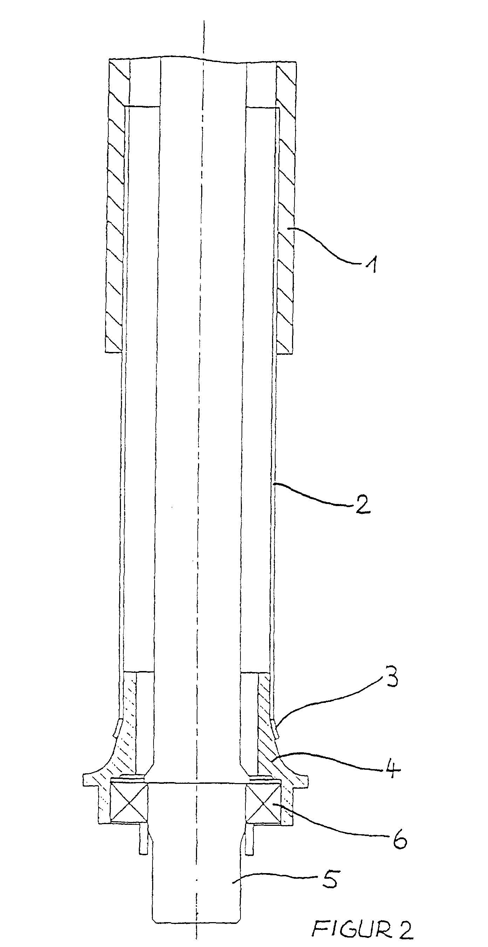

Die Sicherheitslenksäule entsprechend den Darstellungen der Figuren 1 bis 3 besteht aus einem Lenksäulengehäuse 1 mit einem sich in den Fahrgastraum erstreckenden Mantelrohr 2 und einer darin drehbar gelagerten Lenkwelle 5, an der das Lenkrad befestigt wird. In das lenkradseitige Ende des Mantelrohres 2 ist ein konisches Bauteil 4 mit seiner Seite des geringsten Außendurchmessers eingesetzt, wobei sich der Außendurchmesser nach außen hin erweitert, bis er im Endbereich annähernd radial verläuft. In das konische Bauteil 4 ist die Lagerung 6 der Lenkwelle 5 eingesetzt.

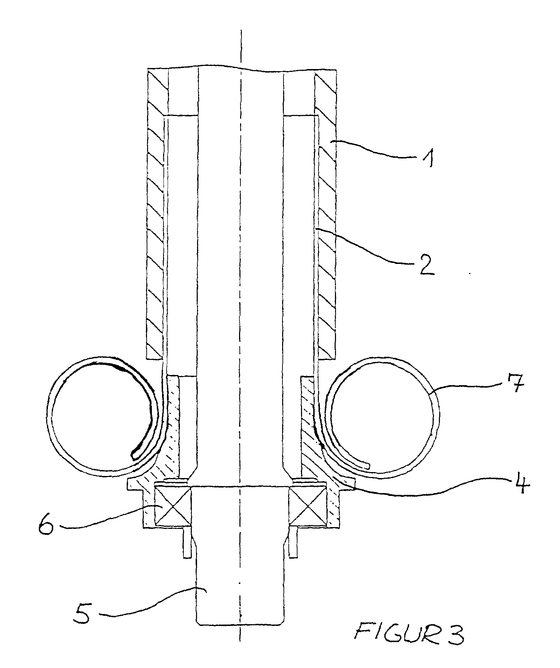

Das Mantelrohr 2 ist ein Stück auf das konische Bauteil 4 aufgeschoben und besitzt in regelmäßigen Abständen auf seinem Umfang verteilt axiale Einkerbungen, an denen das Mantelrohr während eines Frontalunfalles beim Ineinanderschieben von konischem Bauteil 4 und Mantelrohr 2 in definierter Weise aufreißt. Die dabei entstehenden streifenförmigen Segmente des Mantelrohres 2 werden durch die konische Fläche des konischen Bauteils 4 radial nach außen abgebogen, wobei sie sich, wie in der Figur 3 dargestellt, lockenartig aufdrehen oder auftulpen.

Dies hat als positiven Nebeneffekt zur Folge, daß die derartig verformten Segmente 7 des Mantelrohres 2 sich zwar radial um die Lenksäule nach außen erstrecken, daß aber keine scharfen Blechteile über die Kontur der Lenkradnabe in den Fahrgastraum hervortreten.

Die Festigkeit des Mantelrohres 2 ist so ausgelegt, daß sich die Lenksäule bei einem Frontalcrash und Zündung des Airbags zunächst nicht verformt, sich jedoch beim Aufprall des Fahrers auf den Airbag zusammenschiebt. Dabei erfolgt keine Intrusion des Mantelrohres 2 in das Lenksäulengehäuse und somit auch keine Kollision mit anderen Bauteilen.

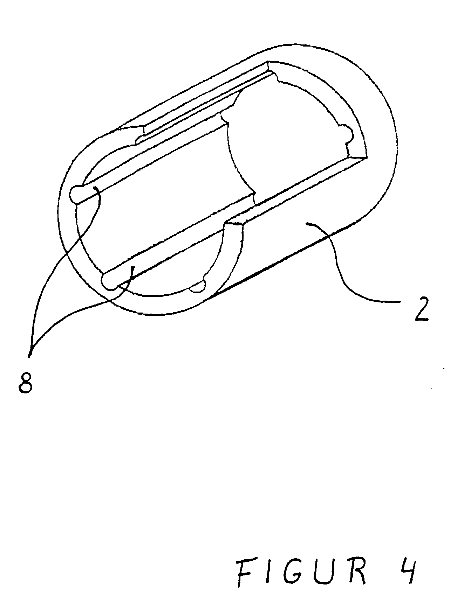

In der Figur 4 ist ein teilweiser Ausschnitt eines Mantelrohres einer erfindungsgemäßen Sicherheitslenksäule dargestellt. Darin sind die Materialschwächungen 8 im Querschnitt gesehen runde Nuten, die am Innenumfang des Mantelrohres 2 eingeformt sind.

### Bezugszeichenliste

- 1: Lenksäulengehäuse
- 2: Mantelrohr
- 3: Einkerbungen
- 4: konisches Bauteil
- 5: Lenkwelle
- 6: Lagerung
- 7: verformtes Segment
- 8: Materialschwächung

## Patentansprüche

1. Sicherheitslenksäule für Kraftfahrzeuge bestehend aus einem Lenksäulengehäuse (1), einem sich in den Fahrgastraum erstreckenden Mantelrohr (2) und einer darin drehbar gelagerten und im Fall eines Unfalles verkürzbaren Lenkwelle (5) zur Aufnahme eines Lenkrades, wobei in dem sich in den Fahrgastraum erstreckenden Ende des Mantelrohres (2) über den Umfang verteilte Materialschwächungen (8) eingebracht sind und zu dem Ende des Mantelrohres benachbart, ein konusartiges Bauteil (4) koaxial angeordnet ist, dessen kleinster Außendurchmesser kleiner oder gleich dem Innendurchmesser des Mantelrohres (2) ist, wobei das konusartige Bauteil (4) mit seinem kleinsten Außendurchmesser dem Mantelrohr (2) zugewandt ist.
**dadurch gekennzeichnet, daß**
sich die Materialschwächungen (8) über die gesamte Länge des Mantelrohres (2) erstrecken.

2. Sicherheitslenksäule nach Anspruch 1,
**dadurch gekennzeichnet, daß**
die Materialschwächungen (8) in das Mantelrohr (2) eingeformte Nuten sind.

3. Sicherheitslenksäule nach Anspruch 2,
**dadurch gekennzeichnet, daß**
die Nuten im Querschnitt gesehen eine Keilform, Schwalbenschwanzform, Kreisform oder U-Form aufweisen.

4. Sicherheitslenksäule nach einem oder mehreren der vorhergehenden Ansprüche
**dadurch gekennzeichnet, daß**
die Materialschwächungen (8) am Außenumfang oder am Innenumfang des Mantelrohres (2) eingebracht sind.

## Claims

1. Safety steering column for motor vehicles, consisting of a steering column housing (1), a steering column tube (2), which extends into the passenger compartment, and a steering shaft (5), which is rotatably mounted in the tube and can be shortened upon the occurrence of an accident, for holding a steering wheel, wherein material weakenings (8), which are distributed over the circumference, are made in the end of the steering column tube (2) extending into the passenger compartment, and a conical component (4) is disposed coaxially adjacent to the end of the steering column tube, the minimum outside diameter of which component is smaller than or equal to the inside diameter of the steering column tube (2), wherein the conical component (4) faces the steering column tube (2) with its minimum outside diameter, **characterised in that**
the material weakenings (8) extend over the entire length of the steering column tube (2).

2. Safety steering column according to Claim 1,
**characterised in that**
the material weakenings (8) are grooves which are shaped into the steering column tube (2).

3. Safety steering column according to Claim 2,
**characterised in that,**
viewed in cross section, the grooves are wedge-shaped, dovetailed, circular or U-shaped.

4. Safety steering column according to one or more of the preceding Claims,
**characterised in that**
the material weakenings (8) are made at the outside circumference or at the inside circumference of the steering column tube (2).

## Revendications

1. Colonne de direction de sécurité pour véhicule comprenant un boîtier de colonne de direction (1), un manchon (2) s'étendant dans l'habitacle et un arbre de direction (5) monté à rotation dans celui-ci et pouvant être raccourci en cas d'accident pour recevoir un volant, des matériaux d'amortissement (8) répartis à la périphérie étant introduits à l'extrémité du manchon (2) s'étendant dans l'habitacle, et au voisinage de l'extrémité du manchon étant disposé coaxialement un élément conique (4) dont le plus petit diamètre externe est plus petit ou égal au diamètre interne du manchon (2), l'élément conique (4) étant tournant par son plus petit diamètre externe dans le manchon (2),
**caractérisée en ce que,**
les matériaux d'amortissement (8) s'étendent sur toute la longueur du manchon (2).

2. Colonne de direction de sécurité selon la revendication 1,
**caractérisée en ce que**
les matériaux d'amortissement (8) sont des rainures ménagées dans le manchon (2).

3. Colonne de direction de sécurité selon la revendication 2,
**caractérisée en ce que**
les rainures présentent, vues en coupe, une forme en coin, une forme en queue d'aronde, une forme en cercle ou une forme en U.

4. Colonne de direction de sécurité selon l'une ou plusieurs des revendications précédentes,
**caractérisée en ce que**
les matériaux d'amortissement (8) sont introduits à la périphérie externe ou à la périphérie interne du manchon (2).
